# EUROPEAN PATENT APPLICATION

(11) **EP 4 852 611 A1**
(43) Date of publication of application: **09.12.2026**
(21) Application number: 25180090.0
(22) Date of filing: 02.06.2025
(51) Int. Cl.: H04W 88/06, H04W 16/14, H04W 24/10

(54) **MULTI-RAT SPECTRUM SHARING**

(71) Applicant: Nokia Technologies Oy, 02610 Espoo (FI)
(72) Inventor: SABOURI-SICHAN, Faranaz, 9220 Aalborg (FI); SELVAGANAPATHY, Srinivasan, 560045 Bangalore (IN); GÜRSU, Halit Murat, 81379 Munich (DE); SAYED HASSAN, Mohamad, 91360 Epinay sur-orge (FR)
(74) Representative: Bryers Intellectual Property Ltd

(57) **Abstract**

There is disclosed apparatus configured to: communicate using a first Radio Access Technology, RAT; and determine, whilst being served by or camped on a serving cell, whether a detected neighboring cell is either: (i) a second RAT only neighboring cell, or (ii) a first and second RAT multi-RAT spectrum sharing, MRSS, neighboring cell; and report, to a network node, measurements associated with the detected neighboring cell and collected according to the determination. Also provided is corresponding apparatus for cells, corresponding methods and corresponding computer programs and computer readable mediums.

## Description

### Field of the Disclosure

Various example embodiments relate to apparatus for use in a Multiple Radio Access Technology (multi-RAT) environment, together with corresponding methods for same.

### Background to the Invention

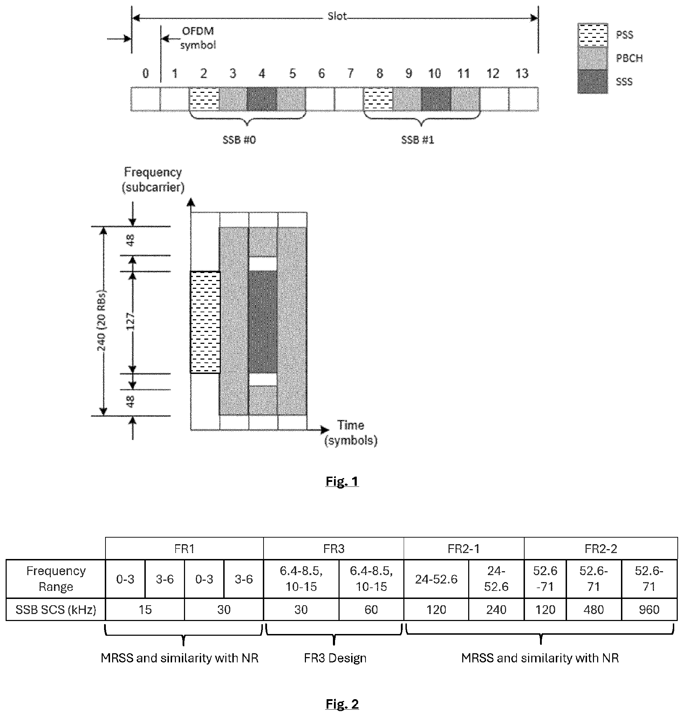

With multi-RAT, a mobile device can connect to more than one type of cellular network, and there are implications for spectrum sharing. For example, in respect of multi-RAT with 5G (ITU designed IMT-2020) and presently developing 6G (ITU designated IMT-2030), highly efficient multi-RAT spectrum sharing (MRSS) is essential to provide wide area 6G coverage and MRSS is expected to be an integrated part of 6G. Indeed, 6G is expected to support operation in a wide range of spectrum allocations including FR1 and FR2 as illustrated in fig. 1.

### Summary of the Invention

According to some aspects, there is provided the subject matter of the independent claims. Some further aspects are defined in the dependent claims.

According to a first example embodiment, there is provided apparatus configured to: communicate using a first Radio Access Technology, RAT; and determine, whilst being served by or camped on a serving cell, whether a detected neighboring cell is either: (i) a second RAT only neighboring cell, or (ii) a first and second RAT multi-RAT spectrum sharing, MRSS, neighboring cell; and report, to a network node, measurements associated with the detected neighboring cell and collected according to the determination.

The apparatus may not be configured to communicate using the second RAT.

The apparatus may be further configured to: receive, using the first RAT, configuration to perform measurements on the serving cell of the apparatus and one or more neighboring cells.

The apparatus may be further configured to: receive, from the cell that the apparatus is either served by or camped on, an indication of whether the detected neighboring cell is either a second RAT only neighboring cell or a first RAT and second RAT MRSS neighboring cell, wherein the determination is based on the received indication. Where this is the case, the indication may comprise a list of second RAT only neighboring cells and/or a list of first RAT only neighboring cells. Also, the apparatus may be further configured to: receive an indication that the detected neighboring cell is a first RAT and second RAT, MRSS neighboring cell, including an MRSS operating frequency of the detected neighboring cell; and use the MRSS operating frequency.

Alternatively, the apparatus may be further configured to: receive, from the neighboring cell, a second RAT compliant synchronization signal block, SSB, wherein the SSB further includes a first RAT element, ignored by or not discerned by a second RAT only compliant UE, the element providing an indication of whether the neighboring cell is one of either a first RAT only neighboring cell or a first RAT and second RAT, MRSS neighboring cell, and wherein the determination is based on the received indication. Where this is the case, the apparatus may be further configured to: receive, from the neighboring cell an indication that the neighboring cell is a first RAT and second RAT MRSS neighboring cell, including an MRSS operating frequency of the neighboring cell; and use the MRSS operating frequency.

The apparatus may be further configured to: receive configuration to perform measurements on the serving cell of the apparatus and one or more neighboring cells, wherein the apparatus is configured to support inter-RAT (iRAT) measurements and the configuration includes an indication to report the iRAT measurements. Where this is the case the determination may indicate that the detected neighboring cell is a second RAT only neighboring cell and the measurements associated with the detected neighboring cell include the iRAT measurements according to the configuration.

According to a second example embodiment, there is provided apparatus for a cell configured to: transmit an indication of whether a neighboring cell is either a second RAT only neighboring cell or a first RAT and second RAT MRSS neighboring cell; and receive, from a user equipment (UE), measurements associated with the neighboring cell and collected according to the transmitted indication.

The indication may comprise a list of second RAT only neighboring cells and/or a list of first RAT only neighboring cells.

The apparatus may be further configured to: transmit an indication that a neighboring cell is a first RAT and second RAT, MRSS neighboring cell, including an MRSS operating frequency of the neighboring cell. The indication may be a physical cell type parameter.

According to a third example embodiment, there is provided apparatus for a cell configured to: transmit a second RAT compliant SSB, wherein the SSB further includes a first RAT compliant element, ignored by or not discerned by a second RAT only compliant UE, the element providing an indication of whether the cell is one of either a first RAT only neighboring cell or a first RAT and second RAT, MRSS neighboring cell. The apparatus may be further configured to: transmit an indication that the cell is a first RAT and second RAT MRSS neighboring cell, including an MRSS operating frequency of the neighboring cell.

According to a fourth example embodiment, there is provided apparatus comprising: means for communicate using a first Radio Access Technology, RAT; and determine, whilst being served by or camped on a serving cell, whether a detected neighboring cell is either: (i) a second RAT only neighboring cell, or (ii) a first and second RAT multi-RAT spectrum sharing, MRSS, neighboring cell; and means for reporting, to a network node, measurements associated with the detected neighboring cell and collected according to the determination.

The apparatus may not be configured to communicate using the second RAT.

The apparatus may further comprise: means for receiving, using the first RAT, configuration to perform measurements on the serving cell of the apparatus and one or more neighboring cells.

The apparatus may further comprise: means for receiving, from the cell that the apparatus is either served by or camped on, an indication of whether the detected neighboring cell is either a second RAT only neighboring cell or a first RAT and second RAT MRSS neighboring cell, wherein the determination is based on the received indication. Where this is the case, the indication may comprise a list of second RAT only neighboring cells and/or a list of first RAT only neighboring cells. Also, the apparatus may further comprise: means for receiving an indication that the detected neighboring cell is a first RAT and second RAT, MRSS neighboring cell, including an MRSS operating frequency of the detected neighboring cell; and use the MRSS operating frequency.

Alternatively, the apparatus may further comprise: means for receiving, from the neighboring cell, a second RAT compliant synchronization signal block, SSB, wherein the SSB further includes a first RAT element, ignored by or not discerned by a second RAT only compliant UE, the element providing an indication of whether the neighboring cell is one of either a first RAT only neighboring cell or a first RAT and second RAT, MRSS neighboring cell, and wherein the determination is based on the received indication. Where this is the case, the apparatus may further comprise: means for receiving , from the neighboring cell an indication that the neighboring cell is a first RAT and second RAT MRSS neighboring cell, including an MRSS operating frequency of the neighboring cell; and means for using the MRSS operating frequency.

The apparatus may further comprise: means to receive configuration to perform measurements on the serving cell of the apparatus and one or more neighboring cells, wherein the apparatus is configured to support inter-RAT (iRAT) measurements and the configuration includes an indication to report the iRAT measurements. Where this is the case the determination may indicate that the detected neighboring cell is a second RAT only neighboring cell and the measurements associated with the detected neighboring cell include the iRAT measurements according to the configuration.

According to a fifth example embodiment, there is provided apparatus for a cell comprising: means for transmitting an indication of whether a neighboring cell is either a second RAT only neighboring cell or a first RAT and second RAT MRSS neighboring cell; and receive, from a user equipment (UE), measurements associated with the neighboring cell and collected according to the transmitted indication.

The indication may comprise a list of second RAT only neighboring cells and/or a list of first RAT only neighboring cells.

The apparatus may further comprise means for transmitting an indication that a neighboring cell is a first RAT and second RAT, MRSS neighboring cell, including an MRSS operating frequency of the neighboring cell. The indication may be a physical cell type parameter.

According to a sixth example embodiment, there is provided apparatus for a cell comprising: means for transmitting a second RAT compliant SSB, wherein the SSB further includes a first RAT compliant element, ignored by or not discerned by a second RAT only compliant UE, the element providing an indication of whether the cell is one of either a first RAT only neighboring cell or a first RAT and second RAT, MRSS neighboring cell. The apparatus may further comprise means for transmit an indication that the cell is a first RAT and second RAT MRSS neighboring cell, including an MRSS operating frequency of the neighboring cell.

According to a seventh example embodiment, there is provided a method comprising: communicating, with a UE, using a first Radio Access Technology, RAT; and determining, at the UE, whilst being served by or camped on a serving cell, whether a detected neighboring cell is either: (i) a second RAT only neighboring cell, or (ii) a first and second RAT multi-RAT spectrum sharing, MRSS, neighboring cell; and reporting, to a network node, measurements associated with the detected neighboring cell and collected according to the determination.

The method may further comprise: receiving, at the UE, using the first RAT, configuration to perform measurements on the serving cell and one or more neighboring cells.

The method may further comprise: receiving, at the UE, from the cell that the UE is either served by or camped on, an indication of whether the detected neighboring cell is either a second RAT only neighboring cell or a first RAT and second RAT MRSS neighboring cell, wherein the determination is based on the received indication. Where this is the case, the indication may comprise a list of second RAT only neighboring cells and/or a list of first RAT only neighboring cells. Also, the method may further comprise: receiving, at the UE, an indication that the detected neighboring cell is a first RAT and second RAT, MRSS neighboring cell, including an MRSS operating frequency of the detected neighboring cell; and using the MRSS operating frequency.

Alternatively, the method may further comprise: receiving, , at the UE, from the neighboring cell, a second RAT compliant synchronization signal block, SSB, wherein the SSB further includes a first RAT element, ignored by or not discerned by a second RAT only compliant UE, the element providing an indication of whether the neighboring cell is one of either a first RAT only neighboring cell or a first RAT and second RAT, MRSS neighboring cell, and wherein the determination is based on the received indication. Where this is the case, the method may further comprise: receiving, from the neighboring cell an indication that the neighboring cell is a first RAT and second RAT MRSS neighboring cell, including an MRSS operating frequency of the neighboring cell; and using the MRSS operating frequency.

The method may further comprise: receiving configuration to perform measurements on the serving cell of the UE and one or more neighboring cells, wherein the UE is configured to support inter-RAT (iRAT) measurements and the configuration includes an indication to report the iRAT measurements. Where this is the case the determination may indicate that the detected neighboring cell is a second RAT only neighboring cell and the measurements associated with the detected neighboring cell include the iRAT measurements according to the configuration.

According to a eighth example embodiment, there is provided a method for a cell comprising: transmitting an indication of whether a neighboring cell is either a second RAT only neighboring cell or a first RAT and second RAT MRSS neighboring cell; and receiving, from a user equipment (UE), measurements associated with the neighboring cell and collected according to the transmitted indication.

The indication may comprise a list of second RAT only neighboring cells and/or a list of first RAT only neighboring cells.

According to a ninth example embodiment, there is provided a method for a cell comprising: transmitting a second RAT compliant SSB, wherein the SSB further includes a first RAT compliant element, ignored by or not discerned by a second RAT only compliant UE, the element providing an indication of whether the cell is one of either a first RAT only neighboring cell or a first RAT and second RAT, MRSS neighboring cell. The method may further comprise: transmitting an indication that the cell is a first RAT and second RAT MRSS neighboring cell, including an MRSS operating frequency of the neighboring cell. The method may further comprise: transmitting an indication that a neighboring cell is a first RAT and second RAT, MRSS neighboring cell, including an MRSS operating frequency of the neighboring cell. The indication may be a physical cell type parameter.

According to tenth, eleventh and twelfth embodiments, there is provided a computer program and/or a computer readable medium comprising instructions which, when executed by an apparatus, cause the apparatus to perform a method according to the seventh, eighth and ninth embodiments respectfully.

Some example embodiments will now be described with reference to the accompanying drawings.

### Brief Description of Drawings

Figure 1 illustrates a 5G Synchronization Signal Block (SSB) structure;
Figure 2 illustrates a possible radio spectrum allocation for 6G;
Figure 3 illustrates a possible system architecture for MRSS;
Figure 4 illustrates RRM measurement configuration and reporting in RRC_CONNECTED;
Figures 5 and 6 are signaling charts Illustrating example methods;
Figures 7 to 9 are flowcharts illustrating example methods; and
Figure 10 is a simplified block diagram illustrating a device that is suitable for implementing example embodiments of the present disclosure.

### Detailed Description

The principle of the present disclosure will now be described with reference to some example embodiments. It is to be understood that these example embodiments are described only for the purpose of illustration and help those skilled in the art to understand and implement the present disclosure, without suggesting any limitation as to the scope of the disclosure. The disclosure described herein can be implemented in various manners other than the ones described below.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

### 5G SSB Structure

Synchronization Signal/Physical Broadcast Channel (PBCH) block (SSB) is transmitted periodically by a network (NW) and used by User Equipment (UE) for cell detection as well as measurements and to extract necessary information from the network. In particular, synchronization signals including a Primary Synchronization Signal (PSS) and a Secondary Synchronization Signal (SSS). PSS provides timing estimate and together with SSS the physical cell ID (PCI). PBCH carries master information block (MIB) and SSB index and DeModulation Reference Signal (DMRS) information to decode System Information Block 1 (SIB1).

SSB can be located anywhere across the carrier bandwidth, is always transmitted over 4 consecutive Orthogonal Frequency-Division Multiplexing (OFDM) symbols with the first symbol determined by the carrier bandwidth and SubCarrier Spacing (SCS). Figure 1 illustrates a 5G SSB structure including an example of location in location in a slot.

### Multi-RAT spectrum sharing (MRSS)

6G is expected to use 7-15 GHz band, also called FR3 as the new 6G-specific spectrum. However, it is also expected that the 5G-6G coexistence will be introduced using MRSS. Some existing 5G spectrum may be refarmed to be used together with 6G and/or upper 6GHz band (6425-7125 MHz) be used for 5G-A extension together with 6G. depicts the expected frequency spectrum and sub-carrier spacing (SCS) in 6G. Figure 2 depicts the expected frequencies and sub-carrier spacing in 6G.

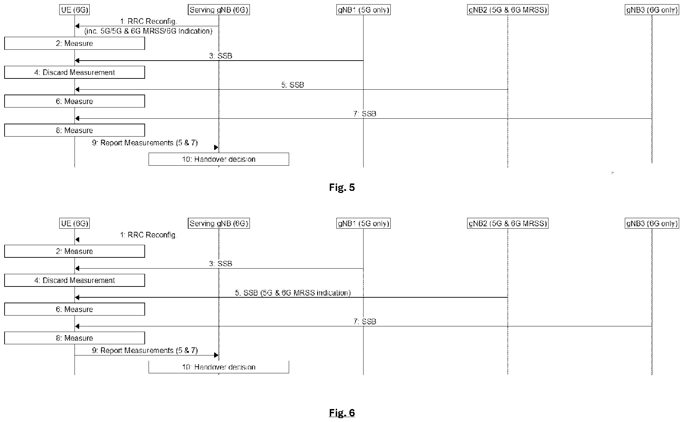

As indicated in Figure 2, 6G is likely going to be deployed in FR1 and maybe also FR2 and share the same spectrum as 5G-A. With focus in FR1, for MRSS between 6G and 5G if the numerologies and rasters are aligned, then any band specified for 6G would automatically be a candidate for MRSS. The 6G band paired with the 5G band for MRSS, may be of smaller, same or larger bandwidth and solutions to support this should be supported.

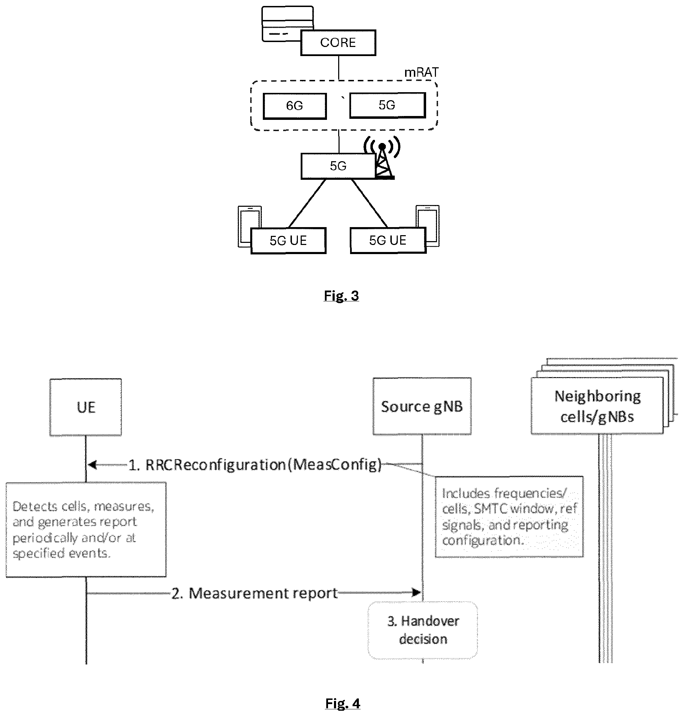

A high level architecture for MRSS is illustrated in Figure 3. It is assumed that the radio unit (RU) is shared between 5G and 6G while the centralized unit (CU) or distributed unit (DU) can be common or independent.

To enable MRSS in a cost-efficient manner, the operators should technically be able to re-use most (if not all) of their existing hardware for MRSS deployments. I.e. sharing RU hardware between 5G and 6G cells. A high-level system architecture for MRSS is shown in **Error! Reference source not found..**

One option to reduce overhead in an MRSS cell could be to at least partially re-use the 5G SSB for 6G in a MRSS cell for an MRSS UE in certain scenarios or cell loads.

For example, 5G SSB could be employed by the UE for AGC, frequency and timing acquisition. If finer time or frequency level synchronization is required for 6G, this could be provided via 6G specific reference signal and, in some scenarios, it may be provided on demand, e.g. upon UE transition to 6G connected mode.

Also, PSS/SSS provides time/frequency synchronization to UE. It also provides the PCI of the cell (assuming the same PCI can be used for both 5G and 6G).

Some redesign of 6G Master Information Block (MIB) is expected, including for example the provision of information related to Network Energy Saving (NES) cells, but MIB content in PBCH does not have sufficient available payload to include 6G MIB. An MRSS UE camping on the 6G MRSS cell may acquire the 6G MIB, when employing the 5G PSS/SSS for 6G MRSS cell synchronization acquisition.

In respect of an SSB pattern itself, it is assumed that when 6G SSB is enabled in an MRSS cell, the design should account for the possibility of Frequency Division Multiplexing (FDM) or Time Division Multiplexing (TDM) the 5G and 6G SSB where applicable, i.e. the possibility of transmitting both 5G and 6G SSBs.

### Mobility

It is desired to keep a device's traffic uninterrupted when it moves within a cell or across different cells of one or more gNBs to continuously monitor the UE's radio link condition toward its serving cell (or camped cell in RRC_IDLE/RRC_INACTIVE) and initiate change of the cell such that the UE has the best possible link toward a gNB which has the capacity and with acceptable interference in the channel. The UE is configured to detect and measure a list of cells or carrier frequencies as part of its mobility. While in RRC_IDLE/RRC_INACTIVE, the measurement is used by UE to perform cell reselection without any reporting to the NW. In RRC_CONNECTED, the UE reports its measurements periodically or whenever a measurement reporting event is met [TS 38.331, clause 5.5].

These measurements are then evaluated at gNB and may result in a handover from current serving cell (source gNB) to a new cell (target gNB). In each of the states UE applies corresponding configuration to extract the information for its measurements and related mobility procedure. **Error! Reference source not found.** illustrates RRM measurement configuration and reporting in RRC_CONNECTED.

L3 measurement configuration in RRC_CONNECTED as specified by 3GPP [TS 38.331] includes information about what UE should measure as copied below:

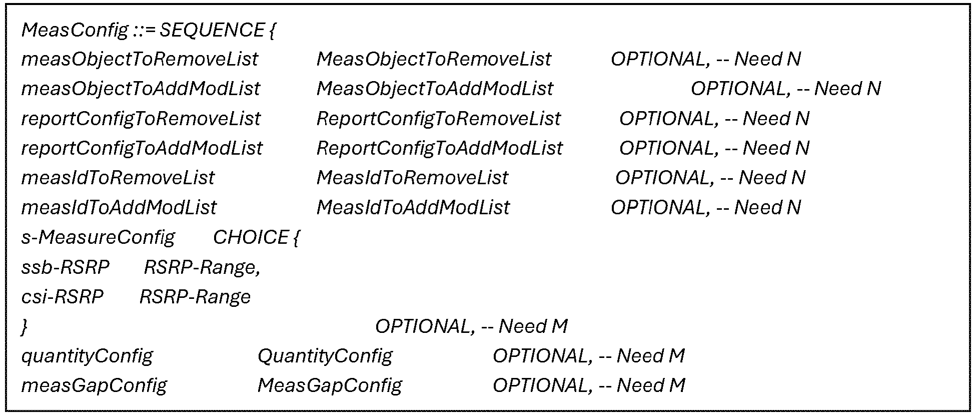

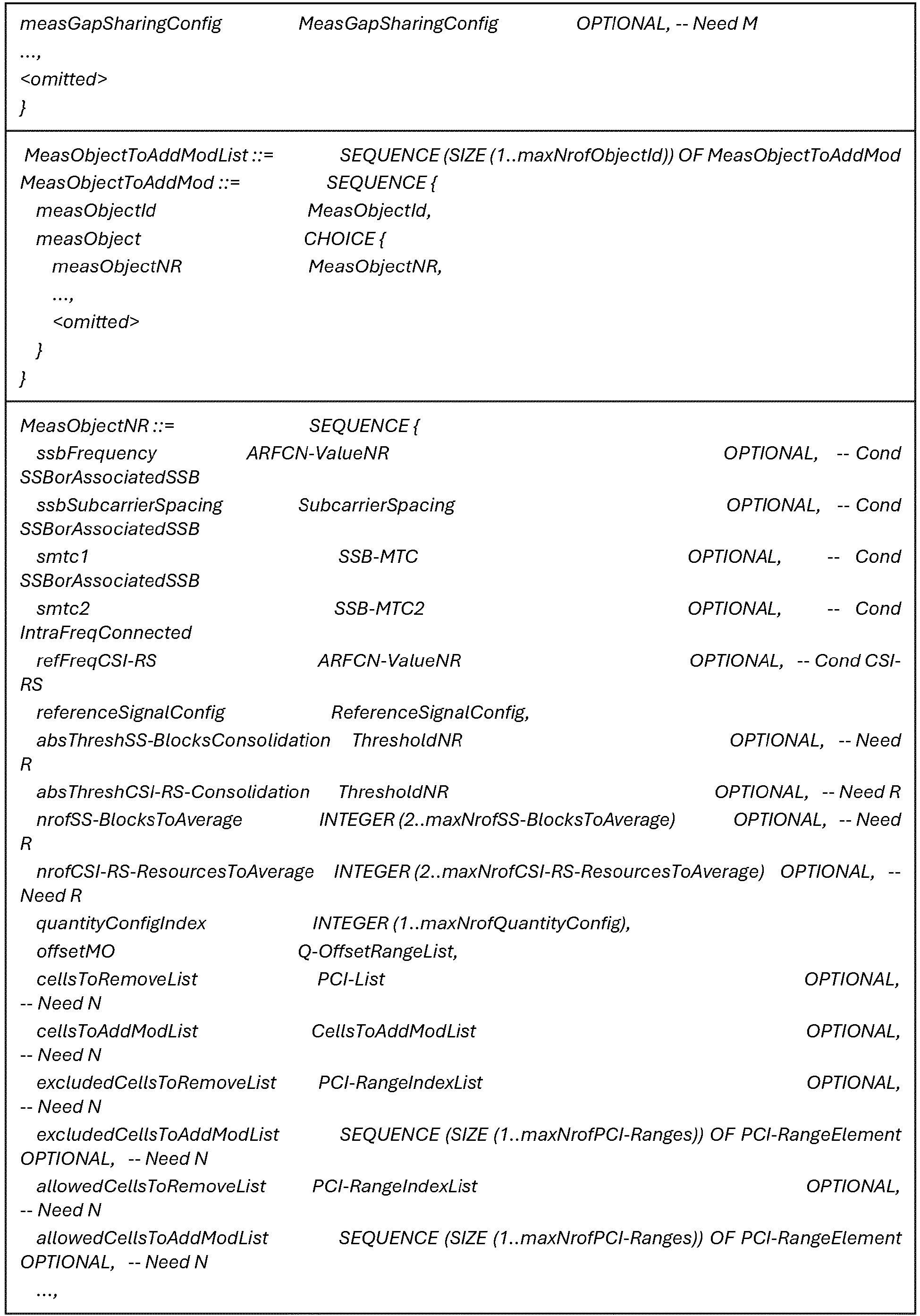

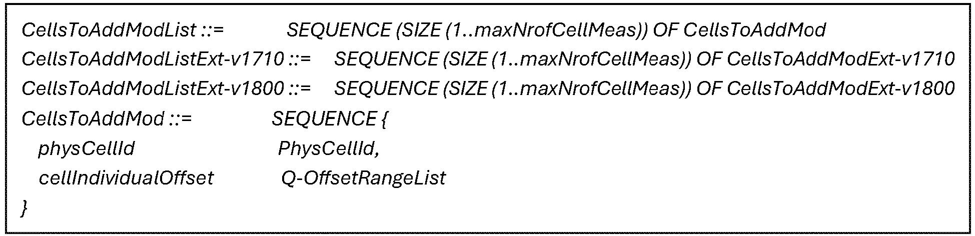

The corresponding RRM measurement report configuration is as below:

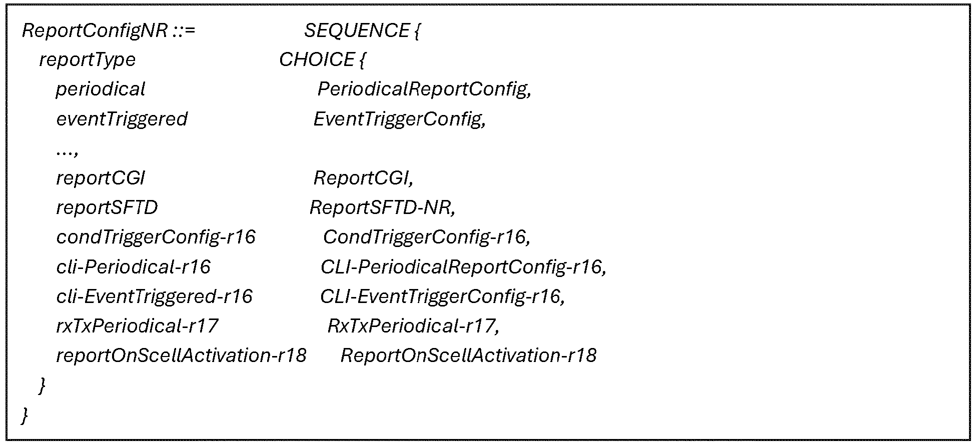

in respect of cross-RAT signaling, a 6G MRSS cell may signal 5G configurations for dedicated 5G RS and/or 5G channel. For example, the preemption indication transmitted by 5G gNB / RAT may be enabled to be detected/decoded by 6G UEs. In other words, for a scenario where a 5G vertical service arrives, a 5G gNB may transmit a preemption DCI to UE(s) to re-schedule resources, already configured or granted for 6G eMBB service, for 5G vertical services. This allows overlap to be avoided between, for example, eMBB resources and 5G vertical services. To enable this mechanism to be applied to 6G, the following is needed: a (group common) RNTI that can be monitored by both 5G and 6G UEs can be used, group common signaling shared between two RATs, and a mechanism for instructing/informing a first RAT UE(s) to start or to stop monitoring for one or more cross-RAT RNTI or group-common DCI/PDCCH or more generally for certain indications/information carried by such DCI/PDCCH.

The disclosure relates to measurement of 6G serving and neighboring cells by 6G UE under the assumption of re-using 5G PSS/SSS contained in 5G SSB.

MRSS cells are mainly deployed by spectrum sharing in the 5G-A deployments in the frequency spectrum below 7 GHz and share same radio unit. To allow support of legacy 5G/5G-A devices in the field together with new 6G-only or 5G-6G devices, the existing broadcast messages expected by 5G devices should persist while support of 6G-only and 5G-6G devices should be added. While one can assume 5G-6G devices could use the majority of 5G signals with added UE internal implementation, it is especially critical that 6G-only devices could also work in MRSS cells, and that the potential changes does not impact 5G devices' functionality.

In respect of expected implementation of 5G & 6G MRSS cells as discussed above, the following below assumptions are made:
First, PSS/SSS part of 5G-SSB can be reused by 6G devices in MRSS cells for time/frequency synchronization and measurements. In case 6G needs optimization in measurement framework - including measurement gaps - 6G-specific measurement-only signals should be transmitted in MRSS cells.

Secondly, there may be difference in 5G PBCH and 6G PBCH, hence, 6G device cannot use (all) the information in PBCH part of 5G SSBs. Hence, information normally provided in PBCH has to be broadcasted in 6G-specific PBCH. Decoupling between 6G PSS/SSS and 6G PBCH can be specified. Hence, a 6G UE can detect 5G PSS/SSS and skip 5G PBCH as 6G PBCH is decoupled from PSS/SSS unlike 5G PBCH coupled with PSS/SSS in 5G SSB.

Thirdly, the same cell ID (PCI) can be used for both 5G and 5G-6G MRSS cells.

The disclosure addresses the following problem. How does the 6G UE differentiate the neighbor cells between 6G only and 6G-MRSS and 5G only neighbor-cells? 6G UEs find and synchronize to the neighboring cells based on PSS and SSS and perform measurements on SSS, but 6G UEs will not be able to differentiate if the neighbor cell is a 5G cell or a 5G-6G MRSS cell. The issue is applicable to any RRC state, but is illustrated below in respect of the RRC_CONNECTED state.

Accordingly, advantages of the solutions described in the present disclosure include improved resource utilization by enabling reuse of hardware/resources for 5G and 6G operation. This resource efficiency is enabled by informing UEs which operation modes are supported by which cells, as described herein.

### First example embodiment

In a first example embodiment, a measurement object in measurement configuration message includes information for MRSS differentiation for 6G only UEs.

At a measurement object level, one use a flag indicating an MRSS frequency. In such a measurement object, before reporting the measurements based on SSB, UE needs to find whether 6G system information (e.g. 6G PBCH) is present in target cell or not to make sure the found cell at given frequency is not 5G-only cell. For example, a flag may be added to indicate MRSS frequency, i.e. the potential detected neighbor cell at this frequency may be 5G or MRSS cell.

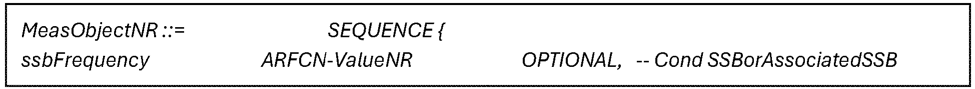

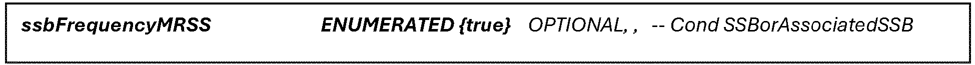

There may be indication as to whether a specific PCI is 6G only or PCI is shared with 5G. Indication of whether the cell is MRSS or standalone 6G may be done with additional flag along with the cell list or can be implicitly indicated as part of the specific offset. This indication is used by the UE to identify that the PCI may be shared between 6G cells and 5G cells in MRSS deployment. When this PCI is detected, the UE will know it is MRSS cell, i.e. 6G support, and does not need to search for further system information before adding this to the report. For example, where the measurement object in measurement configuration specifies the cell ID, it may include information about the cell type being 6G, or MRSS cell type in a new parameter, *physCellType.* In a variant of this, specific cell individual offset may be used for MRSS cells. A subset of the current *Q-OffsetRange*, [dB-24.. dB24], could be dedicated for MRSS cells for example specified in *Q-OffsetRangeListMRSS:*

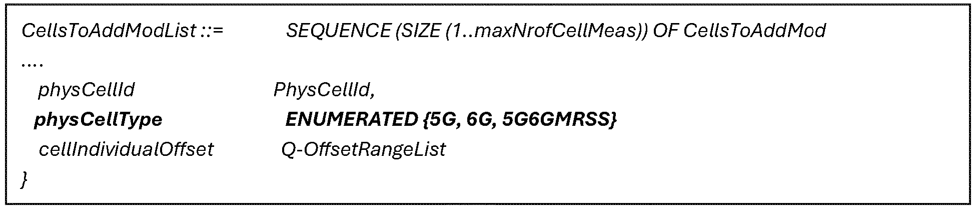

A new cell-list to indicate 5G only can be included in the same measurement object. For example, NW may configure the additional reporting of 5G only measurement results as part of 6G measurement report. Note, the UE doesn't need to be multi-RAT capable. The additional measurement helps NW to know the interference situation from 5G cells for its network management purpose. For example, a separate MRSS cell list may be added as measurement object:

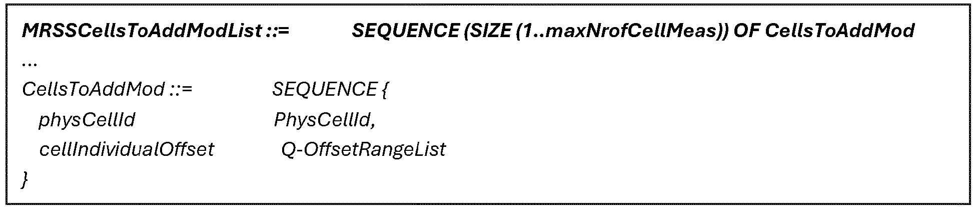

In above, the UE measuring an MRSS cell needs to find further cell information, e.g. by finding whether 6G-PBCH is present, to conclude whether the cell is MRSS and its corresponding measurement should be added to the measurement report, else if it is a 5G-only cell it should not be reported. In a variant, the NW may be further interested to receive 5G-only measurements as well and configure the UE to include measurements on 5G cells in its report as well. The 6G UE is still capable to measure and report these cells and NW can use the report to get knowledge on potential interference in the cell.

Modification of RRC specification in TS 38.331 would facilitate the above (changes in bold).

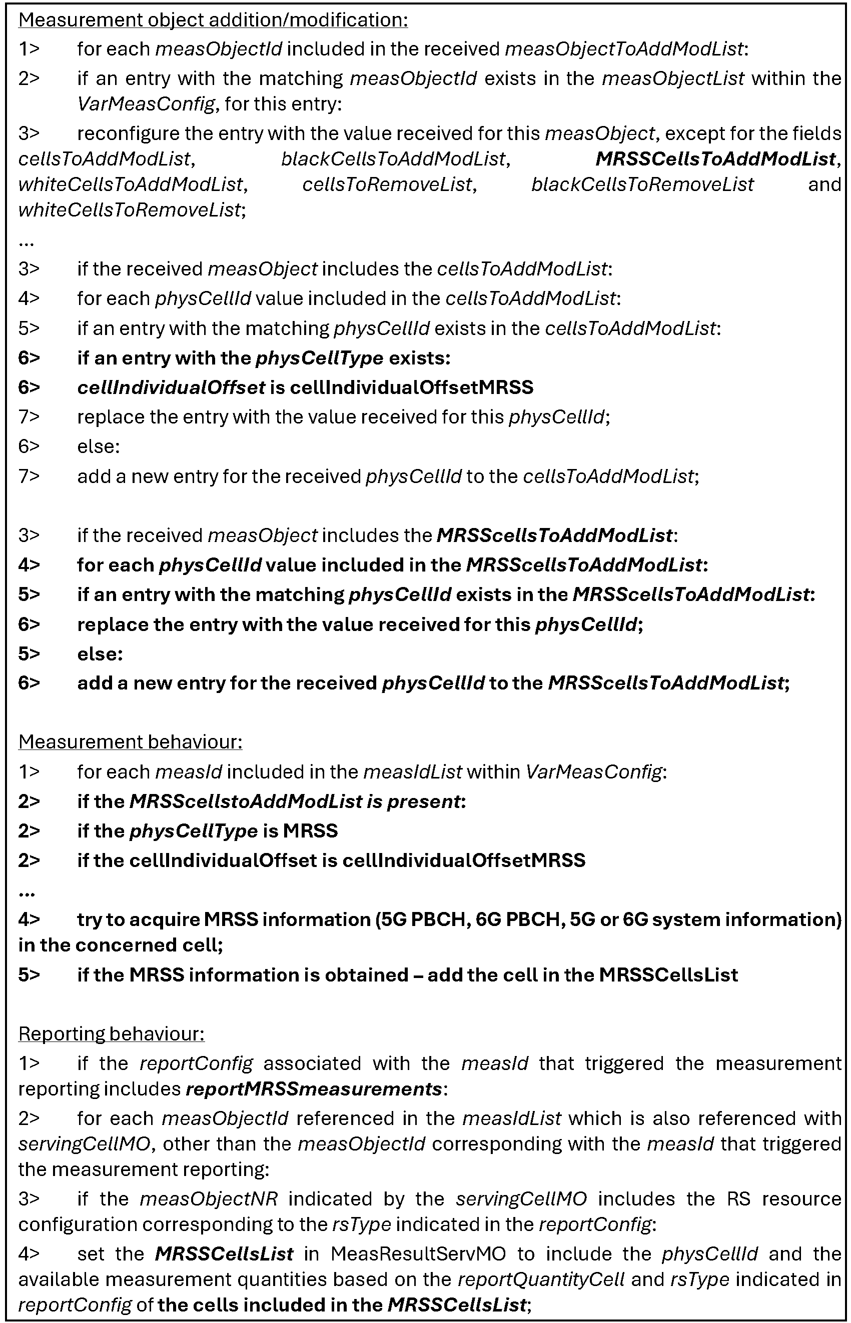

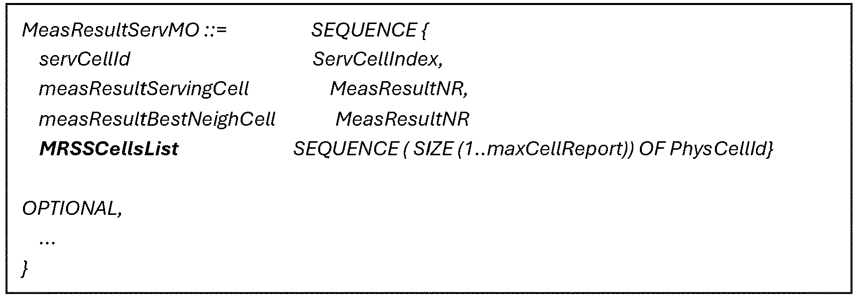

### Second example embodiment

A second example embodiment provides for measurement configuration for Inter-Radio Access Technology (IRAT) handover capable UE in MRSS deployment.

Measures of the first example embodiment can be used for IRAT measurements at UE capable of IRAT measurement. A 5G only cell list can be used to measure and report 5G measurements from UE. A UE may have a separate reporting container to report 5G-6G MRSS cells in a separate container. Also, the MRSS indication in the object can be used by the UE for detecting the 5G-PBCH presence on the PCI to differentiate whether it is 5G PCI or not.

For example, if the UE is a 5G-6G device supporting 5G-6G inter-RAT mobility, it will measure and report the detected MRSS cells as already explained. However, it will also report measurements which are identified as 5G cells. This is determined if *physCellType* exists and is set to 5G, or *((physCellType* exists and is set to MRSS) or *(celllndividualOffset* is not in *Q-OffsetRangeListMRSS)* or (the cell is in *MRSSCellsToAddModList))* AND (no MRSS information - e.g. presence of 6G-PBCH - can be acquired)

### Third example embodiment

A third example embodiment provides for a UE method to differentiate between 5G and 6G cell in MRSS PCI. Specifically, considering 6G MIB is different and broadcasted in 6G-PBCH, it may be possible to allow utilizing 5G PBCH spare bits to indicate the detected cell is an MRSS cell. This requires acceptance of added information in 5G-PBCH by NW but using bits that will not be read by a 5G-only device. This means a small impact on NW but transparent to 5G UEs. Also, a 6G/multi-RAT-5G-6G device can read the reserved bits and identify whether the SSB (5G SSB including PSS/SSS/PBCH) is a shared SSB or not. A 6G/multi-RAT-5G-6G device can then do measurements and reporting or skip based on this information.

As described in background section, any changes in MRSS cells should be kept transparent to 5G UEs already in the field. I.e. the 5G UE should extract exact same information from SSBs and corresponding 5G system information in an MRSS cell. However, the 5G-PBCH spare bits, which are considered not to carry any information by a 5G UE, may be allowed to indicate MRSS cells with a single bit. Hence, a 6G UE should check only for this bit to obtain the information on whether the cell is MRSS without need to get indication along with measurement configuration.

For example, this requires a small change in 5G PBCH transmitted in MRSS cells while saving bigger proposed changes to provide the UE just the information about whether the cell may be MRSS and further search for further MRSS/6G information to exclude possibility that a detected cell is 5G due to reuse of frequency and PCI between 5G and MRSS. For example, a spare bit in 5G PBCH can indicates the existence of 6G PBCH. Note, it is assumed that 6G-only cells will be configured under new measurement object, e.g. MeasObject6G, and have dedicated physical cell IDs (PCI). The main challenge is to be informed whether a found neighboring cell is MRSS.

Figure 5 and 6 are signaling charts illustrating example methods. In figure 5, a 6G UE is providing with an indication of the type of neighboring cells such as a list of 5G only cells and/or a list of 5G & 6G MRSS cells (message 1). With this information, the UE is able to measure SSBs (which can originate from a 5G, 5G&6G MRSS or 6G gNB) and discard the 5G only measurement for the purposes of measurement reporting end potential decision of handover by network node since the UE will be aware of those gNBs which are 5G only. In figure 6, the types of gNB2 and gNB3 are conveyed by the SSBs signals (messages 5 with extra information embedded in the otherwise conventional 5G-type SSB, and message 7 as a 6G SSB). In the case of the 5G only gNB1, its 5G only nature may be discerned by an absence of such an indication).

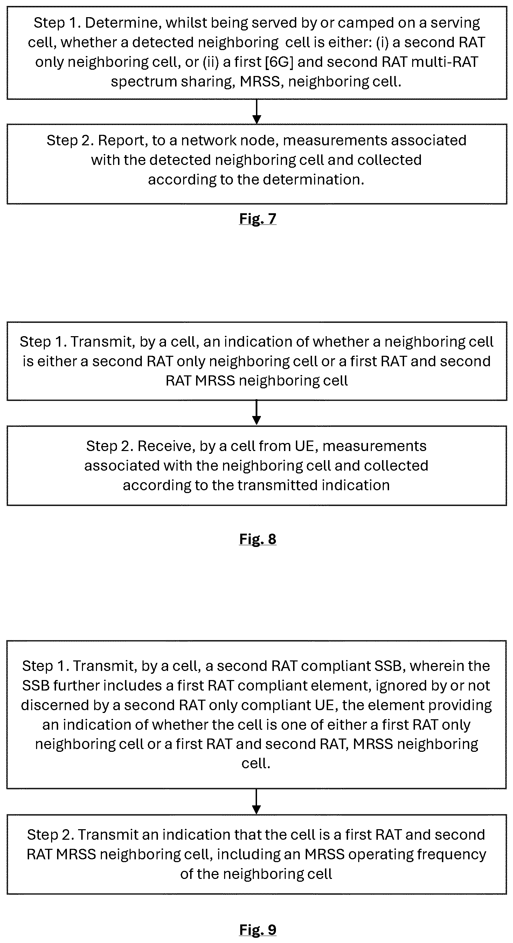

Figure 7 illustrates an example method for a UE configured to communicate using a first Radio Access Technology, RAT. In step 1, a UE determines, whilst being served by or camped on a serving cell, whether a detected neighboring cell is either: (i) a second RAT only neighboring cell, or (ii) a first and second RAT multi-RAT spectrum sharing, MRSS, neighboring cell. In step 2, a UE reports, to a network node, measurements associated with the detected neighboring cell and collected according to the determination.

Figure 8 illustrates an example method for a serving/camped cell. In step 1, the cell transmits an indication, added to measurement configuration, of whether a neighboring cell is either a second RAT only neighboring cell or a first RAT and second RAT MRSS neighboring cell. In step 2, the cell receives, from UE, measurements associated with the neighboring cell and collected according to the transmitted indication.

Figure 9 illustrates an example method for a cell (neighboring a serving/camped on cell). In step 1, the cell transmits a second RAT compliant SSB, wherein the SSB further includes a first RAT compliant element, ignored by or not discerned by a second RAT only compliant UE, the element providing an indication of whether the cell is one of either a first RAT only neighboring cell or a first RAT and second RAT, MRSS neighboring cell. In Step 2, the cell transmits an indication that the cell is a first RAT and second RAT MRSS neighboring cell, including an MRSS operating frequency of the neighboring cell.

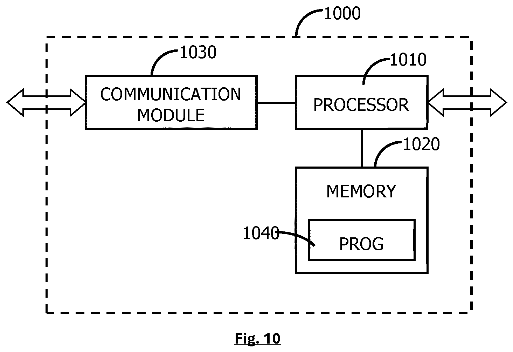

Figure 10 is a simplified block diagram of a device 1000 that is suitable for implementing example embodiments of the present disclosure. As shown, the device 1000 includes a processor 1010, a memory 1020 coupled to the processor 1010, a communication module 1030 coupled to the processor 1010, and a communication interface (not shown) coupled to the communication module 1030. The memory 1020 stores at least a program 1040. The communication module 1030 is for bidirectional communications, for example, via multiple antennas. The communication interface may represent any interface that is necessary for communication.

The program 1040 is assumed to include program instructions that, when executed by the associated processor 1010, enable the device 1000 to operate in accordance with the example embodiments of the present disclosure, as discussed herein with reference to FIGS. 1-10. The example embodiments herein may be implemented by computer software executable by the processor 1010 of the device 1000, or by hardware, or by a combination of software and hardware. The processor 1010 may be configured to implement various example embodiments of the present disclosure.

The memory 1020 may be of any type suitable to the local technical network and may be implemented using any suitable data storage technology, such as a non-transitory computer readable storage medium, semiconductor based memory devices, magnetic memory devices and systems, optical memory devices and systems, fixed memory and removable memory, as non-limiting examples. While only one memory 1020 is shown in the device 1000, there may be several physically distinct memory modules in the device 1000. The processor 1010 may be of any type suitable to the local technical network, and may include one or more of general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Generally, various example embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of example embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods of figures 5 and 6. Generally, program modules include routines, programs, libraries, objects, classes, components, data structures, or the like that perform particular tasks or implement particular abstract data types. The functionality of the program modules may be combined or split between program modules as desired in various example embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable media.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), Digital Versatile Disc (DVD), an optical storage device, a magnetic storage device, or any suitable combination of the foregoing.

Various example embodiments of the techniques have been described. In addition to or as an alternative to the above, the following examples are described. The features described in any of the following examples may be utilized with any of the other examples described herein.

### List of abbreviations

- CU: Centralized Unit
- DMRS: DeModulation Reference Signal
- DU: Distributed Unit
- gNB: 5G Node-B
- MIB: Master Information Block
- MSSS: Mobility SSS
- NES: Network Energy Saving
- NR: New Radio
- OD-SSB: On Demand - SSB
- PBCH: Physical Broadcast Channel
- PCI: Physical Cell Identifier
- PSS: Primary Synchronization Signal
- RAT: Radio Access Technology
- RF: Radio Frequency
- RS: Reference Signal
- RU: Radio Unit
- SCS: Sub-Carrier Spacing
- SIB: System Information Block
- SMTC: SS/PBCH Block Measurement Timing Configuration
- SS: Synchronization Signal
- SSB: SS/PBCH Block
- SSS: Secondary Synchronization Signal
- UE: User Equipment

## Claims

1. Apparatus configured to:
communicate using a first Radio Access Technology, RAT; and
determine, whilst being served by or camped on a serving cell, whether a detected neighboring cell is either:
(i) a second RAT only neighboring cell, or
(ii) a first and second RAT multi-RAT spectrum sharing, MRSS, neighboring cell; and
report, to a network node, measurements associated with the detected neighboring cell and collected according to the determination.

2. Apparatus according to claim 1, wherein the apparatus is not configured to communicate using the second RAT.

3. Apparatus of claim 1 or claim 2, further configured to:
receive, using the first RAT, configuration to perform measurements on the serving cell of the apparatus and one or more neighboring cells.

4. Apparatus according to any of claims 1-3, further configured to:
receive, from the cell that the apparatus is either served by or camped on, an indication of whether the detected neighboring cell is either a second RAT only neighboring cell or a first RAT and second RAT MRSS neighboring cell,
wherein the determination is based on the received indication.

5. Apparatus according to claim 4, wherein the indication comprises a list of second RAT only neighboring cells.

6. Apparatus according to claim 4 or 5, wherein the indication comprises a list of first RAT only neighboring cells.

7. Apparatus according to any of claims 4-6, further configured to:
receive an indication that the detected neighboring cell is a first RAT and second RAT, MRSS neighboring cell, including an MRSS operating frequency of the detected neighboring cell; and
use the MRSS operating frequency.

8. Apparatus according to any of claims 1-3, further configured to:
receive, from the neighboring cell, a second RAT compliant synchronization signal block, SSB, wherein the SSB further includes a first RAT compliant element, ignored by or not discerned by a second RAT only compliant UE, the element providing an indication of whether the neighboring cell is one of either a first RAT only neighboring cell or a first RAT and second RAT, MRSS neighboring cell, and
wherein the determination is based on the received indication.

9. Apparatus according to claim 8, further configured to:
receive, from the neighboring cell an indication that the neighboring cell is a first RAT and second RAT MRSS neighboring cell, including an MRSS operating frequency of the neighboring cell; and
use the MRSS operating frequency.

10. Apparatus according to any preceding claim, further configured to:
receive configuration to perform measurements on the serving cell of the apparatus and one or more neighboring cells, wherein the apparatus is configured to support inter-RAT (iRAT) measurements and the configuration includes an indication to report the iRAT measurements.

11. Apparatus according to claim 10, wherein the determination indicates that the detected neighboring cell is a second RAT only neighboring cell and the measurements associated with the detected neighboring cell include the iRAT measurements according to the configuration.

12. Apparatus for a cell configured to:
transmit an indication of whether a neighboring cell is either a second RAT only neighboring cell or a first RAT and second RAT MRSS neighboring cell; and
receive, from a user equipment (UE), measurements associated with the neighboring cell and collected according to the transmitted indication.

13. Apparatus according to claim 12, wherein the indication comprises a list of second RAT only neighboring cells.

14. Apparatus according to claim 12 or 13, wherein the indication comprises a list of first RAT only neighboring cells.

15. Apparatus according to any of claims 12-14, further configured to:
transmit an indication that a neighboring cell is a first RAT and second RAT, MRSS neighboring cell, including an MRSS operating frequency of the neighboring cell.

16. Apparatus according to claim 15, wherein the indication is a physical cell type parameter.

17. Apparatus for a cell configured to:
transmit a second RAT compliant SSB, wherein the SSB further includes a first RAT compliant element, ignored by or not discerned by a second RAT only compliant UE, the element providing an indication of whether the cell is one of either a first RAT only neighboring cell or a first RAT and second RAT, MRSS neighboring cell.

18. Apparatus according to claim 17, further configured to:
transmit an indication that the cell is a first RAT and second RAT MRSS neighboring cell, including an MRSS operating frequency of the neighboring cell.
